# EUROPEAN PATENT SPECIFICATION

(11) **EP 4 130 173 B1**
(45) Date of publication and mention of the grant of the patent: **29.01.2025**
(21) Application number: 21800221.0
(22) Date of filing: 30.04.2021
(51) Int. Cl.: C09D 11/322, C09D 11/38, C09K 3/16, C09D 7/41, C01G 19/02

(54) **ANTISTATIC HYBRID INK COMPOSITION**
ANTISTATISCHE HYBRIDE TINTENZUSAMMENSETZUNG
COMPOSITION D'ENCRE HYBRIDE ANTISTATIQUE

(30) Priority: 07.05.2020 ES 202030408
(43) Date of publication of application: 08.02.2023
(73) Proprietor: Torrecid, S.A., 12110 Alcora (Castellón) (ES)
(72) Inventor: RUIZ VEGA, Óscar, 12110 Alcora (Castellón) (ES); BRUGADA SECO, Laura, 12110 Alcora (Castellón) (ES); CONCEPCIÓN HEYDORN, Carlos, 12110 Alcora (Castellón) (ES); CORTS RIPOLL, Juan Vicente, 12110 Alcora (Castellón) (ES)
(74) Representative: Carlos Hernando, Borja
(86) International application number: PCT/ES2021/070298
(87) International publication number: WO 2021/224523

(56) References cited:
- EP-A1- 1 611 212
- EP-A1- 2 099 871
- EP-A1- 2 342 589
- WO-A1-2019/203792
- JP-A- 2004 175 870
- JP-A- 2008 031 327
- US-B2- 10 584 259

## Description

The present invention falls within the field of inkjet inks using drop-on-demand (DoD) technology which simultaneously impart a colour effect and antistatic properties when applied to textiles.

### STATE OF THE ART

The state of the art includes examples of compositions intended for depositing conductive materials on textiles. In this sense, patent application US2018/0255637A1 describes a screen printing ink formulation for printing electrically conductive traces on flexible fabrics which comprises an elastomer, a liquid vehicle mixed with the elastomer, such that the liquid vehicle is capable of swelling the elastomer and has a boiling point of 150°C or more at 1 atmospheric pressure, and a plurality of non-spherical, electrically conductive particles. The conductive particles are selected from the group comprising particles in a percentage comprised between 30% and 60% by mass of the ink. These particles can be flake-like, needle-like and/or nanotubular, and they can be comprised of silver and/or carbon. However, the flake-like, needle-like and nanotubular particles are unfeasible in the inkjet ink formulation because they block the holes in the injection heads and, therefore, they prevent the ink from being printed on the fabric. In addition, this application does not provide any information about fundamental aspects in the formulation of an ink such as viscosity. Nevertheless, by indicating that it is intended for screen printing, it follows that the viscosity values are inherently much higher than those values for inkjet and, therefore, unfeasible for its application using this technology. Moreover, it does not provide information about the additives required for the formulation of an inkjet ink such as dispersants and wetting agents, among others. It should also be noted that patent application US2018/0255637A1 does not provide information about conductivity based on the concentration of conductive particles, a fundamental aspect for evaluating effectiveness in antistatic applications.

The state of the art also includes coloured fabrics with antistatic properties. Thus, patent application US2020/0063299A1 describes a coloured garment that comprises a conductive acrylic fibre based on conductive carbon microparticles, as a material that provides the antistatic property, which is coloured with a cationic soluble dye. However, this application has the limitation that it requires prior preparation of the thread or fibre, since it is necessary to incorporate the conductive acrylic fibre based on conductive carbon microparticles and subsequently carry out the weaving process to obtain the conductive textile material. Moreover, patent application US2020/006329 does not provide any information about the dispersion and stabilisation of said conductive carbon microparticles in a liquid medium. Additionally, it is important to indicate that, since the fabric is completely coloured, motifs with different colours, such as images, cannot be printed, nor can each textile piece be personalised with a different decoration.

Finally, it should be noted that the state of the art does not include inks capable of simultaneously stabilising organic and inorganic particles due to their different nature. In this sense, the present invention provides for the formulation of an ink composition that is capable of imparting a good colour effect while maintaining the antistatic property when it is deposited on any type of fabric without the need for prior preparation thereof. For this, the ink composition according to the present invention allows for the simultaneous stabilisation of organic pigments, responsible for the chromatic function, and inorganic particles of SnO₂ doped with Sb₂O₃, responsible for the antistatic function.

### DESCRIPTION OF THE INVENTION

Throughout the description and the claims, the word "comprises" and its variants do not intend to exclude other technical features, additives, components or steps. Moreover, the word "comprises" includes the case of "consists of". For those skilled in the art, other objects, advantages and features of the invention may be partially deduced from both the description and the embodiment of the invention.

The present invention is an antistatic hybrid ink applicable by inkjet drop-on-demand (DoD) technology which simultaneously imparts colour effects and antistatic properties when printed on textiles.

The term "textile" as used in the present invention refers to any natural or synthetic material that has been made from threads, filaments or fibres, of any size, including micro and nanofibres, joined by mechanical, thermal or chemical processes. Examples of materials with which textiles can be made, by way of example, but not limitation, are cotton, hemp, wood, wool, linen, polyester, nylon, polyethylene, polypropylene, elastomers, silk and Lycra, in a pure state or combined therebetween.

The hybrid ink object of the invention comprises particles of SnO₂ doped with Sb₂O₃, in a percentage by weight of the ink comprised between 5% and 10%, with a particle size (D90) less than 500 nm, and they are responsible for providing the printed fabric with the antistatic property. The content of Sb₂O₃ in SnO₂ is comprised between 1.5% and 15% by weight with respect to the total weight of the particles, preferably between 1.5% and 5%. The term "particles of SnO₂ doped with Sb₂O₃" as used in the present invention refers to particles whose main component is SnO₂ to which a certain amount of Sb₂O₃ has been added by physical or chemical methods, resulting in a new indivisible material. By way of example, 100 grams of particles of SnO₂ doped with 5% by weight of Sb₂O₃ means that the content of SnO₂ in the particles is 95 grams and that of Sb₂O₃ is 5 grams, wherein the particles are a material formed by both components that cannot be separated.

In addition, according to the present invention, the particles of SnO₂ doped with Sb₂O₃ are obtained by the synthesis method selected from the group comprising solid state reaction at a maximum temperature comprised between 800°C and 1400°C, sol-gel, hydrothermal synthesis and coprecipitation.

The present invention also comprises at least one organic pigment, in a percentage by weight of the ink comprised between 4% and 10% and which is selected from the group comprising cyan, cobalt blue, turquoise blue, violet, magenta, red, yellow, orange, black, white, green, grey or a mixture thereof.

The term "organic pigment" as used in the present invention refers to any insoluble material in the ink medium, of natural or synthetic origin and characterised in that it comprises double bonds, triple bonds and/or organic chemical groups (amine, sulphone, chlorine, hydroxyl, carboxyl, bromine, etc.) responsible for changing the colour of reflected or transmitted light as a result of wavelength selective absorption, giving rise to a certain colour. Examples of organic pigments, by way of example, but not limitation, are monoazo pigments (yellow 1 pigment, red 3 pigment, red 187 pigment, orange 36 pigment, etc.), diazo pigments (yellow 13 pigment, yellow 17 pigment, red 144 pigment, etc.), phthalocyanine-based pigments (blue 15 pigment, blue 15:1 pigment, green 7 pigment, green 36 pigment), isoindolinone-based pigments, dioxazine-based pigments, anthraquinone pigments, quinacridone-based pigments, perylene pigments or a mixture thereof.

To fix the organic pigments and particles to the textile, it is necessary to include a resin in the formulation of the hybrid ink. In this sense, the present invention comprises at least one resin that is dispersible in water and heat-curable at a temperature below 170°C, in a percentage by weight of the ink comprised between 5% and 15%. The resin is selected from the group comprising urethane resin with polyether groups, urethane resin with polyester groups, urethane resin with polycarbonate groups, acrylic resin or a mixture thereof.

The water-dispersible and heat-curable resins can be formulated directly or commercial resins can be used. Examples of commercial resins, by way of example, but not limitation, are Joncryl HPD, Joncryl 8985, Cromoelastic SE, Cromoelastic NI, Edolan SN and Edolan SE.

The antistatic hybrid ink object of the invention also comprises water in a percentage by weight of the ink comprised between 20% and 35%. In addition, the hybrid ink comprises a solvent, soluble in water, from the glycol family, in a percentage by weight of the ink comprised between 20% and 60%. The water-soluble solvent is selected from the group comprising monoethylene glycol, monopropylene glycol, ethylene glycol propyl ether, 1,2,3-propanetriol, ethylene glycol n-butyl ether, diethylene glycol, diethylene glycol methyl ether, diethylene glycol ethyl ether, diethylene glycol n-butyl ether, triethylene glycol, triethylene glycol methyl ether, triethylene glycol ethyl ether, triethylene glycol n-butyl ether, tripropylene glycol methyl ether, polyethylene glycol, 2,3-butanediol and 1,5-pentanediol or a mixture thereof.

The water-soluble solvent can be formulated directly or commercial products can be used. Examples of commercial solvents, by way of example, but not limitation, are Butyl Carbitol, Dipropylene Glycol, Dowanol DPnB Glycol Ether, Dowanol PPH Glycol Ether, Hexyl Carbitol and Butyl Cellosolve.

The fact that the hybrid ink contains water provides an environmental advantage over other formulations based on hydrocarbons and non-polar solvents. However, this highly polar liquid medium in DoD inkjet formulations also poses an added difficulty when it comes to simultaneously stabilising the particles of SnO₂ doped with Sb₂O₃, which are inorganic in nature, and the organic pigments, of an organic nature. After performing numerous experimental assays, it has been discovered that the required simultaneous stabilisation is achieved by means of optimally selecting the concentration of the dispersants for both types of materials. To that end, the hybrid ink composition comprises:
- At least one dispersant for inorganic particles of SnO₂ doped with Sb₂O₃, in a percentage by weight of the ink comprised between 0.1% and 5%, Examples of dispersants for inorganic particles, by way of example, but not limitation, are polyacrylate salt, acrylate copolymer, alkoxides, non-ionic modified fatty acid derivatives, carboxylic acid salt, phosphoric polyether, polycarboxylic acid salt or a mixture thereof.
   The dispersants for inorganic particles can be formulated directly or commercial products can be used such as Solsperse 40000, Solsperse W320, Solsperse 43000, Disperbyk 184, Disperbyk 185, Disperbyk 190, Tego Dispers 740W and Tego Dispers 760, Joncryl 57, Joncryl 60, Joncryl 63.
- At least one dispersant for organic pigments, in a percentage by weight of the ink comprised between 0.16% and 12%. When already dispersed organic pigment concentrates are used in the composition, said concentrates are selected in a percentage by weight with respect to the total weight of organic pigment comprised between 4% and 120%. Examples of dispersant for organic pigments, by way of example, but not limitation, are copolymer with organic pigment-affinic groups, solution of dipropylene glycol monomethyl ether and high molecular weight copolymers with organic pigment-affinic groups, solution of 2-methyl-2H-isothiazol-3-one and high molecular weight copolymers with organic pigment-affinic groups, quaternary ammonium salt-based copolymer, alcoholic solution of copolymer with organic pigment-affinic groups or a mixture thereof.
The dispersants for organic pigments can be formulated directly or commercial products can be used such as Disperbyk 192, Disperbyk 199, Solsperse 47000, Solsperse 27000, Solsperse 20000 and Solsperse 54000.

Additionally, in its formulation the hybrid ink object of the invention also comprises at least one wetting agent in a percentage by weight of the ink comprised between 0.05% and 1%. The wetting agent is selected from the group comprising a mixture of ethers with polyethylene-polypropylene glycol with monobenzyl ether and C8-C10 alcohols, polyether-polysiloxane copolymer, anionic surfactants, non-ionic surfactants or a mixture thereof.

In addition, the antistatic hybrid ink comprises at least one anti-foaming agent to prevent the formation of bubbles when in the printing circuit and when printing occurs. The content of anti-foaming agent is comprised between 0.05% and 1% of the weight of the ink, and is selected from the group comprising modified silicones, polydimethylsiloxanes, mineral oil derivatives, fatty acid derivatives or a mixture thereof.

In a preferred embodiment of the present invention, the antistatic hybrid ink comprises:
a. Particles of SnO₂ doped with Sb₂O₃, in a percentage by weight of the ink comprised between 5% and 10%, with a particle size (D90) less than 500 nm, wherein the percentage of doping of SnO₂ is comprised between 1.5% and 15% by weight with respect to the total weight of the particles, obtained by solid state reaction at a maximum temperature comprised between 800°C and 1400°C. The selection of the maximum temperature depends on the degree of doping and the type of industrial furnace available.
b. At least one organic pigment in a percentage by weight of the ink comprised between 4% and 10% and which is selected from the group comprising cyan, cobalt blue, turquoise blue, violet, magenta, red, yellow, orange, black, white, green, grey or a mixture thereof.
c. At least one resin that is dispersible in water and heat-curable at a temperature below 170°C in a percentage by weight of the ink comprised between 5% and 15%.
d. Water in a percentage by weight of the ink comprised between 20% and 35%.
e. A water-soluble solvent from the glycol family in a percentage by weight of the ink comprised between 20% and 60%.
f. At least one dispersant for the inorganic particles of SnO₂ doped with Sb₂O₃ in a percentage by weight of the ink comprised between 0.1% and 5%.
g. At least one dispersant for organic pigments in a percentage by weight of the ink comprised between 0.16% and 12%. When already dispersed organic pigment concentrates are used in the composition, said concentrates are selected with a percentage by weight of the dispersant with respect to the total weight of organic pigment comprised between 4% and 120%.
h. At least one wetting agent in a percentage by weight of the ink comprised between 0.05% and 1%.
i. At least one anti-foaming agent in a percentage by weight of the ink comprised between 0.05% and 1%.

In the formulation of inks for DoD inkjet technology, it is essential to define a series of properties that ensure their correct behaviour. In this sense, it is worth noting the value of the viscosity based on the shear rate or derived from the transverse deformation with respect to time, both when the water-based ink is practically at rest (shear rate at 10 s⁻¹) and when it is in motion in the printing equipment circuit (shear rate comprised between 100 s⁻¹ and 1000 s⁻¹). The shear rate was measured with an Anton Paar model MCR102 cone-plate rheometer. The method for measurement consists of placing the water-based ink on a horizontal heated plate. Subsequently, the cone lowers and begins to rotate, measuring the torque. From the torque value, the viscosity value is calculated at a given temperature and shear rate. In this sense, the water-based ink object of the present invention is characterised in that it has the following viscosity values at 40 °C based on the shear rate:
- Between 3 cP and 20 cP at 10 s⁻¹ shear rate.
- Between 3 cP and 20 cP at 100 s⁻¹ shear rate.
- Between 6 cP and 20 cP at 1000 s⁻¹ shear rate.

In the field of inkjet inks, the use of the centipoise unit (cP) is common, where 1 cP is equivalent to 0.001 Pa s in the International System of Units.

Another fundamental property of ink in the field of DoD inkjet is surface tension, since it ensures that the drop exits the print head correctly and is deposited on the textile without expanding, which would cause a loss of definition of the printed motif. In this sense, the antistatic hybrid ink object of the invention is characterised in that it has a surface tension value comprised between 15 mN/m and 35 mN/m.

A common method of measuring the antistatic property in the textile sector is standard EN1149-3:2004. In this sense, the antistatic hybrid ink composition object of the invention is characterised in that it provides the printed fabric with a half decay time (t₅₀) of less than 4 seconds, when the amount of ink deposited on said fabric is equal to or greater than 5 g/m². The half decay time (t₅₀) is defined as the time it takes for the intensity of the electric field induced in the tested textile material to be reduced by half. The method consists of charging the textile material to be tested by inductive effect. To that end, a field electrode is placed immediately below the test sample, which remains horizontal, and it does not make contact with the same.

The field electrode is suddenly subjected to a high voltage. If the sample is conductive or contains conductive elements, a charge with a sign opposite to that of the field electrode is induced on it. The electric field of the field electrode impinging on the conductive elements does not pass through the test sample, and the resulting electric field is reduced in a way that is characteristic of the material tested. This effect is measured and recorded behind the sample, using a suitable field measuring probe. The resulting electric field measured by the measuring probe decreases as the charge induced on the sample increases. This electric field reduction is used to determine the half decay time (t₅₀).

Since the antistatic hybrid ink object of the invention contains water, it may be necessary to incorporate preservatives that prevent bacteria and other types of microorganisms that degrade the composition from developing. Therefore, the water-based ink of the present invention may comprise a preservative in a percentage by weight of the ink comprised between 0.05% and 0.1%, which is selected from the group comprising a mixture of 1,2-benzisothiazol-3-one and 1,2-benzisothiazol-3(2H)-one, 2-methyl-2H-isothiazol-3-one, bronopol, sodium pyrithione, tetramethyl acetylene diurea or a mixture thereof.

### PREFERRED EMBODIMENTS

The following examples are provided for illustrative purposes and are not intended to limit the present invention. Moreover, the present invention covers all possible combinations of particular and preferred embodiments indicated herein.

The following antistatic hybrid ink compositions were prepared:

**Table 1**

| **COMPONENT** | **1** | **2** | **3** | **4** | **5** | **6** | **7** |
|---|---|---|---|---|---|---|---|
| Water | 27.09 | 28 | 24.5 | 22.5 | 26 | 34.5 | 26.99 |
| 1,2,3-propanetriol | 28 | 22.5 | 20.35 | 21.82 | 12.85 | 14.25 | 28 |
| Monoethylene glycol | 15 | 6 | 6 | 4.14 | 5 | 5.5 | 15 |
| Dipropylene glycol | 1.7 | 3 | 5 | 3.5 | | | 1.7 |
| 1,3-butanediol | 6.5 | 5 | 6 | 7 | 3.15 | 4.05 | 6.5 |
| 1,5-pentanediol | 7 | 8 | 5 | 2 | 2.75 | 3.5 | 7 |
| Cyan organic pigment | 4 | | | | | | 4 |
| Magenta organic pigment | | 5.5 | | | | | |
| Yellow organic pigment | | | 7 | | | | |
| Black organic pigment | | | | 7.5 | | | |
| Orange organic pigment | | | | | 10 | | |
| Green organic pigment | | | | | | 6.5 | |
| SnO₂ doped with 1.5% Sb₂O₃ | 5 | | | 7.5 | | 10 | |
| SnO₂ doped with 3% Sb₂O₃ | | 6.25 | | | 7.5 | | |
| SnO₂ doped with 5% Sb₂O₃ | | | 6.5 | | | | |
| SnO₂ doped with 15% Sb₂O₃ | | | | | | | 5 |
| Polyurethane resin with polyester groups | 5 | 7.5 | 12 | 15 | 11 | 10 | 5 |
| Polyurethane resin with polyether groups | | | | | | 3.5 | |
| Polyurethane resin with polycarbonate groups | | | | | | 0.25 | |
| Acrylic resin | | 2 | | | 4 | | |
| Polyacrylate salt | | | 0.75 | 0.5 | 1.5 | | |
| Acrylate copolymer | | | | | | | 0.05 |
| Non-ionic modified fatty acid derivative | 0.2 | | | | 2.25 | 1.5 | 0.15 |
| Alkoxides | | | | 0.5 | | | |
| Polycarboxylic acid salt | | 0.6 | | | | 0.5 | |
| Carboxylic acid salt | | | 0.25 | | | | |
| Phosphoric polyether | | 0.5 | | 0.6 | 1.25 | | |
| Copolymer with organic pigment-affinic groups | 0.16 | 4.4 | | | | 1.7 | 0.16 |
| Solution of dipropylene glycol monomethyl ether and high molecular weight copolymer with organic pigment-affinic groups | | | 6.3 | 4.25 | | | |
| Quaternary ammonium salt-based copolymer | | | | 2.69 | 11.5 | 3.5 | |
| Wetting agent based on a mixture of ethers with polyethylene-polypropylene glycol with monobenzyl ether and C8-C10 alcohols | 0.3 | | | | 0.15 | 0.15 | 0.3 |
| Polyether polysiloxane copolymer-based wetting agent | | 0.5 | | 0.35 | | | |
| Non-ionic surfactant wetting agent | | | 0.15 | | | | |
| Modified silicone anti-foaming agent | 0.05 | | 0.1 | | 0.5 | 0.35 | 0.15 |
| Polydimethylsiloxane anti-foaming agent | | 0.15 | | 0.1 | 0.5 | 0.15 | |
| Preservative based on a mixture of 1,2-benzisothiazol-3-one and 1,2-benzisothiazol-3(2H)-one, 2-methyl-2H-isothiazol-3-one | | 0.1 | 0.1 | 0.05 | 0.1 | 0.1 | |

The properties in terms of viscosity and surface tension of each of the antistatic hybrid inks are indicated below.

**Table 2**

| Ink properties | 1 | 2 | 3 | 4 | 5 | 6 | 7 |
|---|---|---|---|---|---|---|---|
| Viscosity (40°C) at 10 s⁻¹ (CP) | 15.09 | 12.52 | 11.69 | 14.53 | 10.18 | 6.52 | 15.10 |
| Viscosity (40°C) at 100 s⁻¹ (CP) | 15.13 | 12.23 | 12.47 | 15.04 | 9.85 | 7.18 | 15.15 |
| Viscosity (40°C) at 1000 s⁻¹ (CP) | 15.00 | 11.90 | 12.45 | 14.90 | 9.70 | 7.11 | 15.00 |
| Surface tension (mN m) | 20 | 30 | 17 | 15 | 18 | 35 | 20 |

The antistatic hybrid inks 1, 2, 3, 4, 5, 6 and 7 were applied with DoD inkjet equipment on three types of fabrics, one 100% cotton fabric, another 50% cotton and 50% polyester fabric and a third 100% polyester fabric. In each type of fabric, each ink was printed on three specimens measuring 300 mm per side. In all cases, the amount of ink deposited on the specimen was 20 g/m². Subsequently, each printed specimen was subjected to a heat treatment at 160°C for 5 minutes.

The printed and heat-treated specimens were evaluated both from the point of view of colorimetric performance and antistatic property. The colorimetric study focused on determining the CieLa*b* colorimetric coordinates using a spectrophotometer (Minolta or similar), with D65 lighting and detection conditions of 10°. As for the measurement of the electrostatic property, the half decay time t₅₀ was measured according to standard EN1149-3:2004.

Next, the mean value of L, a* and b* obtained from the three specimens of each type of fabric and with each ink is shown.

**Table 3**

| | 100% cotton fabric | | | 50% cotton 50% polyester fabric | | | 100% polyester fabric | | |
|---|---|---|---|---|---|---|---|---|---|
| Composition applied on the fabric | L | a* | b* | L | a* | b* | L | a* | b* |
| 1 | 57.55 | -20.09 | -31.77 | 60.05 | -13.25 | -22.14 | 68.98 | -8.98 | -15.12 |
| 2 | 54.23 | 41.51 | -7.86 | 58.14 | 35.3 | -5.02 | 67.05 | 21.54 | -3.23 |
| 3 | 83.33 | 2.01 | 75.62 | 84.02 | 2.20 | 64.27 | 85.16 | 2.32 | 49.62 |
| 4 | 30.06 | 0.38 | 1.54 | 45.25 | 0.29 | 1.50 | 59.28 | 0.03 | 1.18 |
| 5 | 57.11 | 58.11 | 72 | 63.51 | 40.03 | 63.57 | 68.56 | 37.94 | 57.77 |
| 6 | 52.01 | -55.44 | 6.87 | 58.45 | -49.78 | 6.18 | 65.10 | -43.98 | 5.25 |
| 7 | 58,50 | -19.78 | -30.42 | 63.50 | -14.63 | -21.96 | 68.10 | -9.01 | -14.86 |

The following table indicates the mean value of the half decay time (t₅₀) obtained from the three specimens of each type of fabric and with each ink.

**Table 4**

| | 100% cotton fabric | 50% cotton 50% polyester fabric | 100% polyester fabric |
|---|---|---|---|
| Ink composition applied on the fabric | t₅₀ (s) EN1149-3:2004 | t₅₀ (s) EN1149-3:2004 | t₅₀ (s) EN1149-3:2004 |
| 1 | 2.8 | 3.0 | 3.2 |
| 2 | 2.2 | 2.5 | 2.8 |
| 3 | 1.2 | 1.3 | 1.6 |
| 4 | 1.9 | 2.2 | 2.5 |
| 5 | 1.7 | 1.9 | 2.1 |
| 6 | 1.5 | 1.7 | 1.8 |
| 7 | 1.2 | 1.4 | 1.5 |

## Claims

1. An antistatic hybrid ink composition applicable using inkjet drop-on-demand (DoD) technology of the type that simultaneously imparts a colour effect and antistatic properties on textiles, and comprising:
a. Particles of SnO₂ doped with Sb₂O₃, in a percentage by weight of the ink comprised between 5% and 10% and with a particle size (D90) smaller than 500 nm.
b. At least one organic pigment in a percentage by weight of the ink comprised between 4% and 10% and which is selected from the group comprising cyan, cobalt blue, turquoise blue, violet, magenta, red, yellow, orange, black, white, green, grey or a mixture thereof.
c. At least one resin that is dispersible in water and heat-curable at temperatures below 170°C in a percentage by weight of the ink comprised between 5% and 15%.
d. Water in a percentage by weight of the ink comprised between 20% and 35%.
e. A water-soluble solvent from the glycol family in a percentage by weight of the ink comprised between 20% and 60%.
f. At least one dispersant for inorganic particles of SnO₂ doped with Sb₂O₃ in a percentage by weight of the ink comprised between 0.1% and 5%.
g. At least one dispersant for organic pigments in a percentage by weight of the ink comprised between 0.16% and 12%.
h. At least one wetting agent in a percentage by weight of the ink comprised between 0.05% and 1%.
i. At least one anti-foaming agent in a percentage by weight of the ink comprised between 0.05% and 1%.

2. The antistatic hybrid ink composition according to claim 1, wherein the percentage of doping of SnO₂ is comprised between 1.5% and 15% by weight with respect to the total weight of the particles, preferably between 1.5% and 5%.

3. The antistatic hybrid ink composition according to any of the preceding claims, wherein the organic pigment and the dispersant are used in the form of already dispersed organic pigment concentrates with a percentage by weight of dispersant with respect to the total weight of organic pigment comprised between 4% and 120%.

4. The antistatic hybrid ink composition according to any of the preceding claims, wherein the viscosity values at 40°C based on the shear rate are:
a. Between 3 cP (3mPa*s) and 20 cP (20 mPa*s) at 10 s⁻¹ shear rate.
b. Between 3 cP (3 mPa*s) and 20 cP (20 mPa*s) at 100 s⁻¹ shear rate.
c. Between 6 cP (6 mPa*s) and 20 cP (20 mPa*s) at 1000 s⁻¹ shear rate.

5. The antistatic hybrid ink composition according to any of the preceding claims, wherein the surface tension value is comprised between 15 mN/m and 35 mN/m.

6. The antistatic hybrid ink composition according to any of the preceding claims, wherein the printed fabric has a half decay time (t₅₀) of less than 4 seconds when the amount of ink deposited on said fabric is equal to or greater than 5 g/m².

7. The antistatic hybrid ink composition according to any of the preceding claims, wherein the particles of SnO₂ doped with Sb₂O₃ are obtained by the synthesis method selected from the group comprising solid state reaction at a maximum temperature comprised between 800°C and 1400°C, sol-gel, hydrothermal synthesis and coprecipitation.

8. The antistatic hybrid ink composition according to any of the preceding claims, wherein the water-dispersible and heat-curable resin is selected from the group comprising urethane resin with polyether groups, urethane resin with polyester groups, urethane resin with polycarbonate groups, acrylic resin or a mixture thereof.

9. The antistatic hybrid ink composition according to any of the preceding claims, wherein the water-soluble solvent is selected from the group comprising monoethylene glycol, monopropylene glycol, ethylene glycol propyl ether, 1,2,3-propanetriol, ethylene glycol n-butyl ether, diethylene glycol, diethylene glycol methyl ether, diethylene glycol ethyl ether, diethylene glycol n-butyl ether, triethylene glycol, triethylene glycol methyl ether, triethylene glycol ethyl ether, triethylene glycol n-butyl ether, tripropylene glycol methyl ether, polyethylene glycol, 2,3-butanediol, 1,5-pentanediol or a mixture thereof.

10. The antistatic hybrid ink composition according to any of the preceding claims, wherein the wetting agent is selected from the group comprising a mixture of ethers with polyethylene-polypropylene glycol with monobenzyl ether and C8-C10 alcohols, polyether-polysiloxane copolymer, anionic surfactants and non-ionic surfactants or a mixture thereof.

11. The antistatic hybrid ink composition according to any of the preceding claims, wherein the anti-foaming agent is selected from the group comprising modified silicones, polydimethylsiloxanes, mineral oil derivatives, fatty acid derivatives or a mixture thereof.

12. The antistatic hybrid ink composition according to any of the preceding claims, wherein the composition comprises a preservative in a percentage by weight of the ink comprised between 0.05% and 0.1% and which is selected from the group comprising a mixture of 1,2-benzisothiazol-3-one and 1,2-benzisothiazol-3(2H)-one and 2-methyl-2H-isothiazol-3-one, bronopol, sodium pyrithione and tetramethyl acetylene diurea or a mixture thereof.

## Patentansprüche

1. Antistatische Hybrid-Tintenzusammensetzung, die unter Verwendung der Tintenstrahl-Drop-on-Demand-(DoD-)Technologie anwendbar ist, von der Art, die gleichzeitig einen Farbeffekt und antistatische Eigenschaften auf Textilien verleiht, und die Folgendes umfasst:
a. Partikel aus SnO₂ dotiert mit Sb₂O₃, in einem Gewichtsanteil der Tinte zwischen 5 % und 10 % und mit einer Partikelgröße (D90) kleiner als 500 nm.
b. Mindestens ein organisches Pigment in einem Gewichtsanteil der Tinte zwischen 4 % und 10 %, das aus der Gruppe ausgewählt ist, die Cyan, Kobaltblau, Türkisblau, Violett, Magenta, Rot, Gelb, Orange, Schwarz, Weiß, Grün, Grau oder eine Mischung davon umfasst.
c. Mindestens ein in Wasser dispergierbares und bei einer Temperatur unter 170 °C wärmehärtbares Harz in einem Gewichtsanteil der Tinte zwischen 5 % und 15 %.
d. Wasser in einem Gewichtsanteil der Tinte zwischen 20 % und 35 %.
e. Ein wasserlösliches Lösemittel aus der Glykolfamilie in einem Gewichtsanteil der Tinte zwischen 20 % und 60 %.
f. Mindestens ein Dispergiermittel für anorganische Partikel aus SnO₂ dotiert mit Sb₂O₃ in einem Gewichtsanteil der Tinte zwischen 0,1 % und 5 %.
g. Mindestens ein Dispergiermittel für organische Pigmente in einem Gewichtsanteil der Tinte zwischen 0,16 % und 12 %.
h. Mindestens ein Benetzungsmittel in einem Gewichtsanteil der Tinte zwischen 0,05 % und 1 %.
i. Mindestens ein Antischaummittel in einem Gewichtsanteil der Tinte zwischen 0,05 % und 1 %.

2. Antistatische Hybrid-Tintenzusammensetzung gemäß Anspruch 1, wobei der Prozentsatz der Dotierung mit SnO₂ zwischen 1,5 Gew.-% und 15 Gew.-%, bezogen auf das Gesamtgewicht der Partikel, vorzugsweise zwischen 1,5 % und 5 %, beträgt.

3. Antistatische Hybrid-Tintenzusammensetzung nach einem der vorhergehenden Ansprüche, wobei das organische Pigment und das Dispergiermittel in Form von bereits dispergierten organischen Pigmentkonzentraten verwendet werden, wobei der Gewichtsanteil des Dispergiermittels bezogen auf das Gesamtgewicht des organischen Pigments zwischen 4 % und 120 % liegt.

4. Antistatische Hybrid-Tintenzusammensetzung gemäß einem der vorhergehenden Ansprüche, wobei die Viskositätswerte bei 40 °C basierend auf der Schergeschwindigkeit wie folgt sind:
a. Zwischen 3 cP (3 mPa*s) und 20 cP (20 mPa*s) bei einer Scherrate von 10 s⁻¹.
b. Zwischen 3 cP (3 mPa*s) und 20 cP (20 mPa*s) bei einer Scherrate von 100 s⁻¹.
c. Zwischen 6 cP (6 mPa*s) und 20 cP (20 mPa*s) bei einer Scherrate von 1000 s⁻¹.

5. Antistatische Hybrid-Tintenzusammensetzung gemäß einem der vorhergehenden Ansprüche, wobei der Oberflächenspannungswert zwischen 15 mN/m und 35 mN/m liegt.

6. Antistatische Hybrid-Tintenzusammensetzung gemäß einem der vorhergehenden Ansprüche, wobei das bedruckte Gewebe eine Halbzerfallszeit (t₅₀) von weniger als 4 Sekunden aufweist, wenn die auf das Gewebe aufgebrachte Tintenmenge gleich oder größer als 5 g/m² ist.

7. Antistatische Hybrid-Tintenzusammensetzung gemäß einem der vorhergehenden Ansprüche, wobei die Partikel aus SnO₂ dotiert mit Sb₂O₃ durch das Syntheseverfahren gewonnen werden, das aus der Gruppe ausgewählt ist, die Festkörperreaktionen bei einer Maximaltemperatur zwischen 800 °C und 1400 °C, Sol-Gel, hydrothermale Synthese und Kopräzipitation umfasst.

8. Antistatische Hybrid-Tintenzusammensetzung gemäß einem der vorhergehenden Ansprüche, wobei das wasserdispergierbare und wärmehärtbare Harz aus der Gruppe ausgewählt ist, die Urethanharz mit Polyethergruppen, Urethanharz mit Polyestergruppen, Urethanharz mit Polycarbonatgruppen, Acrylharz oder eine Mischung davon umfasst.

9. Antistatische Hybrid-Tintenzusammensetzung gemäß einem der vorhergehenden Ansprüche, wobei das wasserlösliche Lösemittel aus der Gruppe ausgewählt ist, die Monoethylenglykol, Monopropylenglykol, Ethylenglykolpropylether, 1,2,3-Propantriol, Ethylenglykol-n-butylether, Diethylenglykol, Diethylenglykolmethylether, Diethylenglykolethylether, Diethylenglykol-n-butylether, Triethylenglykol, Triethylenglykolmethylether, Triethylenglykolethylether, Triethylenglykol-n-butylether, Tripropylenglykolmethylether, Polyethylenglykol, 2,3-Butandiol, 1,5-Pentandiol oder eine Mischung davon umfasst.

10. Antistatische Hybrid-Tintenzusammensetzung gemäß einem der vorhergehenden Ansprüche, wobei das Benetzungsmittel aus der Gruppe ausgewählt ist, die eine Mischung von Ethern mit Polyethylen-Polypropylenglykol mit Monobenzylether und C8-C10-Alkoholen, Polyether-Polysiloxan-Copolymer, anionische Tenside und nichtionische Tenside oder eine Mischung davon umfasst.

11. Antistatische Hybrid-Tintenzusammensetzung gemäß einem der vorhergehenden Ansprüche, wobei das Antischaummittel aus der Gruppe ausgewählt ist, die modifizierte Silikone, Polydimethylsiloxane, Mineralölderivate, Fettsäurederivate oder eine Mischung davon umfasst.

12. Antistatische Hybrid-Tintenzusammensetzung gemäß einem der vorhergehenden Ansprüche, wobei die Zusammensetzung ein Konservierungsmittel in einem Gewichtsanteil der Tinte zwischen 0,05 % und 0,1 % umfasst und das Konservierungsmittel aus der Gruppe ausgewählt ist, die eine Mischung aus 1,2-Benzisothiazol-3-on und 1,2-Benzisothiazol-3(2H)-on und 2-Methyl-2H-isothiazol-3-on, Bronopol, Natriumpyrithion und Tetramethylacetylendiharnstoff oder eine Mischung davon umfasst.

## Revendications

1. Composition d'encre hybride antistatique applicable à l'aide de la technologie jet d'encre goutte à la demande (DoD) du type qui confère simultanément un effet de couleur et des propriétés antistatiques sur des textiles, et comprenant :
a. des particules de SnO₂ dopées avec Sb₂O₃, en un pourcentage en poids de l'encre compris entre 5 % et 10 % et de taille de particule (D90) plus petite que 500 nm.
b. au moins un pigment organique en un pourcentage en poids de l'encre compris entre 4 % et 10 % et qui est choisi dans le groupe comprenant le cyan, le bleu de cobalt, le bleu turquoise, le violet, le magenta, le rouge, le jaune, l'orange, le noir, le blanc, le vert, le gris ou un mélange de ceux-ci.
c. au moins une résine qui est dispersible dans l'eau et thermodurcissable à des températures au-dessous de 170 °C en un pourcentage en poids de l'encre compris entre 5 % et 15 %.
d. de l'eau en un pourcentage en poids de l'encre compris entre 20 % et 35 %.
e. un solvant hydrosoluble de la famille des glycols en un pourcentage en poids de l'encre compris entre 20 % et 60 %.
f. au moins un dispersant pour les particules inorganiques de SnO₂ dopées avec Sb₂O₃ en un pourcentage en poids de l'encre compris entre 0,1 % et 5 %.
g. au moins un dispersant pour les pigments organiques en un pourcentage en poids de l'encre compris entre 0,16 % et 12 %.
h. au moins un agent mouillant en un pourcentage en poids de l'encre compris entre 0,05 % et 1 %.
i. au moins un agent antimousse en un pourcentage en poids de l'encre compris entre 0,05 % et 1 %.

2. Composition d'encre hybride antistatique selon la revendication 1, dans laquelle le pourcentage de dopage de SnO₂ est compris entre 1,5 % et 15 % en poids par rapport au poids total des particules, de préférence entre 1,5 % et 5 %.

3. Composition d'encre hybride antistatique selon l'une quelconque des revendications précédentes, dans laquelle le pigment organique et le dispersant sont utilisés sous la forme de concentrés de pigment organique déjà dispersé avec un pourcentage en poids de dispersant par rapport au poids total de pigment organique compris entre 4 % et 120 %.

4. Composition d'encre hybride antistatique selon l'une quelconque des revendications précédentes, dans laquelle les valeurs de viscosité à 40 °C en fonction du taux de cisaillement sont :
a. entre 3 cP (3 mPa*s) et 20 cP (20 mPa*s) à un taux de cisaillement de 10 s⁻¹.
b. entre 3 cP (3 mPa*s) et 20 cP (20 mPa*s) à un taux de cisaillement de 100 s⁻¹.
c. entre 6 cP (6 mPa*s) et 20 cP (20 mPa*s) à un taux de cisaillement de 1 000 s⁻¹.

5. Composition d'encre hybride antistatique selon l'une quelconque des revendications précédentes, dans laquelle la valeur de la tension de surface est comprise entre 15 mN/m et 35 mN/m.

6. Composition d'encre hybride antistatique selon l'une quelconque des revendications précédentes, dans laquelle le tissu imprimé a un temps de demi-dissipation (t₅₀) inférieur à 4 secondes lorsque la quantité d'encre déposée sur ledit tissu est supérieure ou égale à 5 g/m².

7. Composition d'encre hybride antistatique selon l'une quelconque des revendications précédentes, dans laquelle les particules de SnO₂ dopées avec Sb₂O₃ sont obtenues par le procédé de synthèse choisi dans le groupe comprenant une réaction à l'état solide à une température maximale comprise entre 800 °C et 1 400 °C, un procédé sol-gel, une synthèse hydrothermale et une coprécipitation.

8. Composition d'encre hybride antistatique selon l'une quelconque des revendications précédentes, dans laquelle la résine dispersible dans l'eau et thermodurcissable est choisie dans le groupe comprenant de la résine d'uréthane avec des groupes polyéther, de la résine d'uréthane avec des groupes polyester, de la résine d'uréthane avec des groupes polycarbonate, de la résine acrylique ou un mélange de celles-ci.

9. Composition d'encre hybride antistatique selon l'une quelconque des revendications précédentes, dans laquelle le solvant hydrosoluble est choisi dans le groupe comprenant le monoéthylèneglycol, le monopropylèneglycol, l'éther propylique d'éthylèneglycol, le 1,2,3-propanetriol, l'éther n-butylique d'éthylèneglycol, le diéthylèneglycol, l'éther méthylique de diéthylèneglycol, l'éther éthylique de diéthylèneglycol, l'éther n-butylique de diéthylèneglycol, le triéthylèneglycol, l'éther méthylique de triéthylèneglycol, l'éther éthylique de triéthylèneglycol, l'éther n-butylique de triéthylèneglycol, l'éther méthylique de tripropylèneglycol, le polyéthylèneglycol, le 2,3-butanediol, le 1,5-pentanediol ou un mélange de ceux-ci.

10. Composition d'encre hybride antistatique selon l'une quelconque des revendications précédentes, dans laquelle l'agent mouillant est choisi dans le groupe comprenant un mélange d'éthers avec du polyéthylène-polypropylèneglycol avec de l'éther monobenzylique et des alcools en C8-C10, un copolymère polyéther-polysiloxane, les tensioactifs anioniques et les tensioactifs non ioniques ou un mélange de ceux-ci.

11. Composition d'encre hybride antistatique selon l'une quelconque des revendications précédentes, dans laquelle l'agent antimousse est choisi dans le groupe comprenant les silicones modifiées, les polydiméthylsiloxanes, les dérivés d'huile minérale, les dérivés d'acides gras ou un mélange de ceux-ci.

12. Composition d'encre hybride antistatique selon l'une quelconque des revendications précédentes, dans laquelle la composition comprend un conservateur en un pourcentage en poids de l'encre compris entre 0,05 % et 0,1 % et qui est choisi dans le groupe comprenant un mélange de 1,2-benzisothiazol-3-one et de 1,2-benzisothiazol-3(2H)-one et de 2-méthyl-2H-isothiazol-3-one, le bronopol, la pyrithione sodique et la tétraméthylacétylènediurée ou un mélange de ceux-ci.
